# EUROPEAN PATENT SPECIFICATION

(11) **EP 2 987 819 B1**
(45) Date of publication and mention of the grant of the patent: **27.02.2019**
(21) Application number: 14785848.4
(22) Date of filing: 16.04.2014
(51) Int. Cl.: B32B 5/12, B32B 5/26, B29C 70/38

(54) **METHOD FOR PRODUCING REINFORCING FIBER SHEET**
VERFAHREN ZUR HERSTELLUNG EINES VERSTÄRKENDEN FASERBOGENS
PROCEDE DE FABRICATION DE FEUILLE DE FIBRES DE RENFORCEMENT

(30) Priority: 19.04.2013 JP 2013088281
(43) Date of publication of application: 24.02.2016
(73) Proprietor: Toray Industries, Inc., Tokyo 103-8666 (JP)
(72) Inventor: SUZUKI, Tamotsu, Otsu-shi Shiga 520-8558 (JP); NOGUCHI, Yasumoto, Otsu-shi Shiga 520-8558 (JP)
(74) Representative: Hoefer & Partner Patentanwälte mbB
(86) International application number: PCT/JP2014/060816
(87) International publication number: WO 2014/171481

(56) References cited:
- WO-A1-2011/128110
- WO-A1-2012/002417
- JP-A- H11 959
- JP-A- H1 199 580
- JP-A- S5 983 619
- JP-A- 2003 165 851
- JP-A- 2008 149 708
- JP-A- 2009 274 412
- JP-A- 2012 087 420
- DATABASE WPI Week 199148 Thomson Scientific, London, GB; AN 1991-349921 XP002762881, & JP H03 234522 A (NIPPO SANGYO KK) 18 October 1991 (1991-10-18)

## Description

### TECHNICAL FIELD

The present invention relates to a method for producing a reinforcing fiber sheet to be supplied for the production of a reinforcing fiber plastic, and an apparatus for producing a reinforcing fiber sheet that realizes the production method.

### BACKGROUND ART

Various methods are known as a method for producing a reinforcing fiber preform used to produce a fiber reinforced plastic. Known is, for example, a method of cutting out a predetermined cut pattern from a fabric, such as a woven fabric substrate of bundles of reinforcing fibers, and then pressing the cut pattern to be shaped into a preform. However, in this method, regions of the substrate that are different from the cut pattern are disposed of. Thus, the yield of substrates for producing preforms is poor to increase preform production costs.

As a shaping method of placing bundles of reinforcing fibers only at a necessary position, AFP (automated fiber placement) and TFP (tailored fiber placement) are known. When the shape to be obtained is a two-dimensional shape or a gently-curved three-dimensional shape, these methods make it possible to place bundles of reinforcing fibers at any position. However, according to AFP and TFP in the prior art, it is difficult to make the bundles of reinforcing fibers, with good precision, into a complicated three-dimensional shape, for example, a three-dimensional shape having relatively fine undulations or curved surfaces.

### PRIOR ART DOCUMENTS

### PATENT DOCUMENTS

For example, Patent Document 1 discloses a method for producing a preform by using a shiftable laminating head to line up bundles of binder-attached reinforcing fibers onto a preform-shaping tool, and repeating this lining-up operation plural times to form layers positioned at higher levels gradually.

As an apparatus for AFP, Patent Document 2 discloses a method for producing a preform, the method being capable of supplying and placing plural dry fiber roves each independently at different velocities into a mold, and then cutting the roves each independently. This document states that a preform having a non-flat and complicated three-dimensional shape having undulations can be produced directly from fiber roves

Patent Document 3 discloses a fiber-reinforced thermoplastic resin sheet obtained by arranging a plurality of reinforcing-fiber bundles in parallel in one direction to give a reinforcing-fiber sheet, piling a nonwoven fabric of a thermoplastic resin obtained by making a thermoplastic resin fiber into fabric in a nonwoven state on the reinforcing-fiber sheet, pressurizing the nonwoven fabric and piled sheet while heating, melting the nonwoven fabric, impregnating the thermoplastic resin into the reinforcing-fiber bundles into a prepreg state in which the thermoplastic resin is uniformily impregnated into the reinforcing-fiber bundles. Patent Document 4 discloses a a reinforced sheet prepared by arranging bundles of long fibers, e.g. glass fibers, in parallel, and hot melting sheet of thin and coarse (non)woven cloth on surface.
Patent Document 1: Japanese Patent Laid-open Publication No. 2011-57767
Patent Document 2: Japanese Published Patent Publication No. 2011-
Patent Document 3: Japanese Published Patent Publication No. 2003-165851
Patent Document 4: Japanese Published Patent Publication No. H03-234522

### SUMMARY OF THE INVENTION

### PROBLEMS TO BE SOLVED BY THE INVENTION

According to the method described in Patent Document 1, it is very difficult to place bundles of reinforcing fibers onto fine undulations or curved surfaces because of restrictions onto the shape of the laminating head, in particular, restrictions onto the width and the diameter of its heating and pressurizing roller. Even when the laminating head is designed or selected to have a small and slim shape in order to avoid this drawback, the number of bundles of reinforcing fibers that can be supplied at a time from the laminating head is restricted to a small number, such as one to at most several, since the head is made slim. Thus, according to this countermeasure, the apparatus is largely reduced in production capacity to make it impossible to give a process high in competitive power. According to the method described in Patent Document 2, as far as plural fiber roves are pressurized by a single roller, it is likewise difficult to produce a three-dimensional preform having a fine undulation shape directly.

In light of this restriction onto the shape followability of AFP, the following method is conceivable: a method for producing each of thin and highly deformable reinforcing fiber preforms to have a flat or gently-curved three-dimensional shape, which is easy to produce by any AFP apparatus, putting some of the preforms onto one another, fitting the resultant into a preform-shaping mold having a shape corresponding to an actual preform shape, so as to be placed along the shape, and adhering the preforms onto one another, thereby finishing a preform. However, neither of the prior art documents sufficiently discloses any specific method that has attained both of high followability to a complicated shape and high production efficiency.

Thus, an object of the present invention is to provide a production method and a production apparatus for efficiently producing a novel reinforcing fiber sheet, for the production of preforms, that can be made into a three-dimensional shape having fine undulations or curved surfaces precisely and easily, in particular, can be improved in shapability, and that can further improve the yield of bundles of reinforcing fibers used in the sheet.

### SOLUTIONS TO THE PROBLEMS

In order to solve the above-mentioned problems, the method of the present invention for producing a reinforcing fiber sheet is as follows:
A method for producing a reinforcing fiber sheet in which a plurality of bundles of reinforcing fibers that are lined up into one direction to form a plane are adhered to one another through a binder, the method including the following steps (a) and (b):
step (a) of placing a plurality of bundles of reinforcing fibers each having a predetermined length at a predetermined position on a flat plate, and fixing the bundles of reinforcing fibers onto the flat plate, and
step (b) of placing the binder onto the bundles of reinforcing fibers to be adhered onto the bundles.
In the method of the invention for producing the reinforcing fiber sheet, it is preferred that the binder is made from a material having a stretchability of 150% or more.

In the method of the invention for producing the reinforcing fiber sheet, it is preferred that the binder includes fibers lined up into one direction.

In the method of the invention for producing the reinforcing fiber sheet, it is preferred that the binder is a nonwoven fabric made of short fibers and/or continuous fibers.

In the method of the invention for producing the reinforcing fiber sheet, it is preferred that the binder is supplied in a melt-blown manner in which a resin is jetted out through pores to the atmosphere.

In the method of the invention for producing the reinforcing fiber sheet, it is preferred that the binder is a film.

It is preferred that the method of the invention for producing the reinforcing fiber sheet includes the step of making a plurality of cuts in the nonwoven fabric or the film.

It is preferred that the method of the invention for producing the reinforcing fiber sheet includes the step of making a plurality of cuts in the the reinforcing fiber sheet.

In the method of the invention for producing the reinforcing fiber sheet, it is preferred that in step (a), the flat plate is a flat region of a belt conveyer.

In the method of the invention for producing the reinforcing fiber sheet, in step (a), electrostatic chucking force is used to attain the fixing of the bundles of reinforcing fibers onto the flat plate.

The method of the invention for producing the reinforcing fiber sheet further includes, after step (b), step (c) of separating the reinforcing fiber sheet from the flat plate by the cancellation of electrostatic chucking.

In the method of the invention for producing the reinforcing fiber sheet, it is preferred that in the adhesion of the binder onto the bundles of reinforcing fibers, a plurality of positions selected at will are caused to undergo point-adhesion.

### EFFECTS OF THE INVENTION

The method according to the present invention for producing a reinforcing fiber sheet for the production of preforms makes it possible to efficiently produce the reinforcing fiber sheet which is a sheet formable into a three-dimensional shape having fine undulations or curved surfaces precisely and easily, and to improve the yield of bundles of reinforcing fibers used in the sheet.

The method according to the present invention for producing a preform makes it possible to attain highly precise shaping and molding of the preform easily and efficiently since a reinforcing fiber sheet for the production of preforms, that is excellent in shapability as described above, is used.

### BRIEF DESCRIPTION OF THE DRAWINGS

Fig. 1 is a schematic structural view of a method according to an embodiment of the present invention for producing a reinforcing fiber sheet.
Fig. 2 is a schematic structural view of a method according to an embodiment of the present invention for producing a reinforcing fiber sheet.
Fig. 3 is a schematic illustrating an embodiment of making cuts into a binder in the present invention.
Fig. 4 is a schematic view illustrating an embodiment of the application of a fibrous binder in the present invention.

### EMBODIMENTS OF THE INVENTION

Hereinafter, embodiments of the present invention will be described with reference to the drawings.

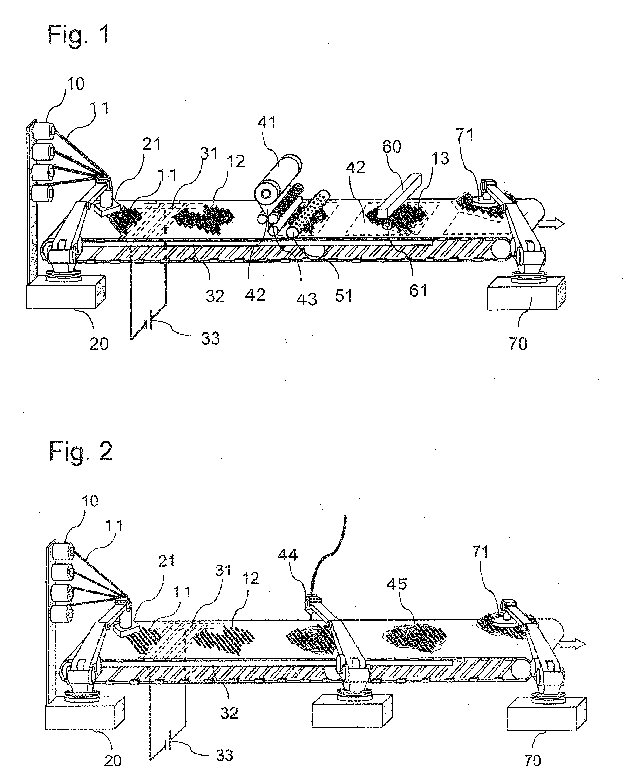

Fig. 1 illustrates an apparatus according to an embodiment of the present invention for producing a reinforcing fiber sheet. In Fig. 1, firstly, a belt conveyer 30 with electrostatic chucking is laid to be extended over the entire length of the apparatus. The belt has, therein, built-in electrodes 31 each made of a slender metallic conductor extended to a direction orthogonal to the longitudinal direction of the belt in such a manner that the electrodes 31 are extended over the entire circumference of the belt and at a constant pitch. The built-in electrodes 31 are exposed to the outside of the belt in the vicinity of both ends in the width direction of the belt, so as to be alternately extended right or left in the width direction. Feeding electrodes 32 located in the vicinity of both the right and left ends in the width direction of the belt in the same manner contact the exposed regions. Any paired right and left electrodes out of the feeding electrodes 32 are connected, respectively, to a positive pole and a negative pole of a high voltage power supply 33. In this way, plus electric charges or minus electric charges are supplied to alternate lines of the built-in electrodes 31, so that electrostatic chucking force is generated on the surface of the belt.

Plural bundles 11 of reinforcing fibers that are pulled out from plural reinforcing fiber bobbins 10, respectively, are introduced to a fiber placement head 21 fitted to a tip of an arm of a reinforcing fiber placement apparatus 20 which is constituted from a polyarticular robot. The fiber placement head 21 has a function of feeding out the bundles 11 of reinforcing fibers each independently at a desired timing, or cutting the bundles 11 of reinforcing fibers and stopping the feeding, thereby supplying and stopping the bundles 11 of reinforcing fibers appropriately in accordance with the shift of the fiber placement head 21 to a predetermined position by means of the reinforcing fiber placement apparatus 20. By these functions, the bundles 11 of reinforcing fibers are lined up substantially parallel to one another in the unit of several of the bundles 11 on the belt conveyer 30, and simultaneously the individual fibers are placed in required and/or desired positions. The placed bundles 11 of reinforcing fibers are fixed onto the belt conveyer 30 by electrostatic chucking force, so that there is no trouble that the once put bundles 11 of reinforcing fibers are separated from the bundle 11-put surface to be turned up. Thus, the operation of placing the bundles 11 of reinforcing fibers is smoothly attained.

By repeating an operation of newly placing some of the bundles 11 of reinforcing fibers in parallel to the already placed bundles 11 of reinforcing fibers at a position adjacent to the bundles 11 of reinforcing fibers lined up substantially parallel to one another in the unit of several bundles, it is possible to produce each reinforcing fiber sheet precursor 12 in which the bundles 11 of reinforcing fibers are placed into a planar shape having a desired contour.

When the bundles 11 of reinforcing fibers are lined up in this case, it is not necessarily essential that a line from the starting point of each of the bundles 11 of reinforcing fibers to the end point thereof is in a straight line form. As far as any adjacent two of the bundles 11 of reinforcing fibers are kept substantially parallel to one another in their microscopic regions, the bundles 11 of reinforcing fibers may be placed to be wholly and/or partially curved into the form of a circular arc.

Next, the belt conveyer 30 is fed to a downstream side of the apparatus (to the right-sided direction in Fig. 1), so that the surface of the belt on which the bundles 11 of reinforcing fibers are not placed appears in the vicinity of the reinforcing fiber placement apparatus 20 while the reinforcing fiber sheet precursor 12 placed on the belt conveyer 30 reaches the vicinity of a binder feeder 40 at the downstream side.

The binder feeder 40 has a nonwoven fabric roll 41 made of fibers acting as a binder, and a cut maker 43. In accordance with the feeding speed of the belt conveyer 30, a cut having a predetermined pattern is given to a nonwoven fabric 42 fed out from the nonwoven fabric roll 41 by the effect of the cut maker 43. Simultaneously, the nonwoven fabric 42 is supplied selectively and appropriately onto the belt conveyer 30, in particular, on the reinforcing fiber sheet precursor 12 by the effect of a cutting device not illustrated and extended over the entire length in the width direction of the belt.

Next, the reinforcing fiber sheet precursor 12 reaches the vicinity of a point adhesion device 50 at a further downstream side of the apparatus. The point adhesion device 50 has an emboss roll 51 having, on its cylindrical outer circumference, projections in the form of dots. This emboss roll 51 rotates in synchronization with the feeding speed of the belt conveyer 30, and further the emboss roll 51 itself is heated to a temperature equal to or higher than the glass transition temperature of the fibers constituting the nonwoven fabric 42. Thus, in accordance with the rotation of the emboss roll 51, the emboss roll 51 causes the nonwoven fabric 42 contacting the projections of the roll to be softened, thereby adhering the nonwoven fabric 42 to the reinforcing fiber sheet precursor 12 below this nonwoven fabric. In this way, each reinforcing fiber sheet 13, which is a target of the present technique, can be produced in which the bundles 11 of reinforcing fibers placed substantially parallel to one another are adhered to one another through the binder in an amount far smaller than that of the bundles 11 of reinforcing fibers.

In this way, the plural bundles 11 of reinforcing fibers are firstly put and fixed onto the flat plate-shaped belt conveyer 30, and subsequently the binder for binding the bundles 11 of reinforcing fibers to one another is given to the bundles from above the bundles. This manner makes properties of the surface on which the bundles 11 of reinforcing fibers are put more stable than the manner of placing the bundles 11 of reinforcing fibers onto a sheet-shaped binder. Accordingly, mistakes of the bundle-putting operation are small in number, and thus the processing speed can be heightened up to the limitation thereof, so that the apparatus can be heightened in working efficiency. Originally, the binder is preferably a nonwoven fabric low in weight per unit area and high in deformability so as not to hinder the deformation of the reinforcing fiber sheet 13 in a preform step that will be described later. Therefore, the operation of putting the bundles 11 of reinforcing fibers onto the binder and into precise positions at a high speed is a highly difficult operation.

Next, the reinforcing fiber sheet 13 reaches the vicinity of a cutting device 60 at a further downstream side of the apparatus. The cutting device 60 has a cutter 61. About the cutter 61, the position thereof is varied in an X-Y axis direction parallel to the front surface of the belt conveyer 30, a rotational θ direction around an axis to which the cutter 61 is set, and a Z direction perpendicular to the front surface of the belt conveyer 30. Thus, with the cutter, unnecessary regions of the nonwoven fabric 42 that are protruded to the outside of the bundles 11 of reinforcing fibers can be cut into a desired shape.

Next, the reinforcing fiber sheet 13 reaches the vicinity of a separating device 70 at a further downstream side of the apparatus. The feeding electrodes 32 are not extended to this region. Thus, electrostatic chucking force is lost from the upper part of the belt conveyer 30 so that the apparatus is in a state that the reinforcing fiber sheet 13 can be easily separated from the belt conveyer 30. In this case, the separating device 70, which is a polyarticular robot, has, at the tip of its arm, a chucking head 71. The head 71 is adapted to the shape of the reinforcing fiber sheet 13 to be finished, and has a vacuum-chucking function. By making the chucking head 71 near to the reinforcing fiber sheet 13 to be further brought into contact with the sheet 13, the chucking head 71 causes the reinforcing fiber sheet 13 to be raised up in the state that the head attracts the sheet 13, so that the reinforcing fiber sheet 13 is separated from the belt conveyer 30.

Thereafter, an appropriate selection is made from the following cases: a case of stocking each of the reinforcing fiber sheets 13 once into a tray or some other; a case of shifting the reinforcing fiber sheet 13, without being subjected to any further operation, onto a preform-shaping mold; and other cases. In any one of these cases, some of the reinforcing fiber sheets 13 are laminated onto one another, the resultant laminate is put into the preform-shaping mold, which has a shape corresponding to the shape of a fiber reinforced resin molded body which is a final product, and further the laminate is pressed in the preform-shaping mold in order that the resultant will be able to express strength and others as the fiber reinforced resin molded body which is the final product. In this way, a reinforcing fiber preform (not illustrated) having a desired reinforcing fiber structure and external shape is finished. At the time of the laminating, the bundles 11 of reinforcing fibers placed into two layers adjacent up and down to each other, out of the respective layers of the reinforcing fiber sheets 13, can be made into an appropriately offset laminated state to have an angle of 0° (basic angle), +45°, -45°, or 90° between the two layers. The reinforcing fiber sheets 13 in which the angles are made offset in this way can be obtained by placing the bundles 11 of reinforcing fibers at a desired angle on the belt conveyer 30. Alternatively, it is allowable to place the bundles 11 of reinforcing fibers at only a specified angle on the belt conveyer 30 to produce the reinforcing fiber sheets 13, and then adjust the placement to have a desired angle when the sheets are laminated onto one another.

The basic angle is defined as an angle made between a basic direction that will be described below and the direction of the bundles 11 of reinforcing fibers placed in each of the reinforcing fiber sheets 13. The basic direction is appropriately set to a predetermined direction in advance, or may be rendered a direction of the bundles 11 of reinforcing fibers placed in the first one (lowest layer) of the reinforcing fiber sheets 13. The direction of the bundles 11 of reinforcing fibers can be defined as follows: when the bundles 11 of reinforcing fibers in one of the reinforcing fiber sheets 13 that is to be placed are, for example, placed into a substantially linear form, the direction can be defined as the longitudinal direction of the line; or when the entire bundles 11 of reinforcing fibers are substantially curved, the direction can be defined as, for example, the direction of a line with which the starting point and the end point of the bundles are joined to one another.

When this reinforcing fiber preform is shaped, the reinforcing fiber sheet 13 that constitutes each of the layers is independent of the reinforcing fiber sheet 13 adjacent to the sheet 13. Thus, the following advantage is obtained even in a case where at the time when, following the pressing operation, the bundles 11 of reinforcing fibers in the reinforcing fiber sheet 13 in each of the layers are shifted to a predetermined position and deformed into a predetermined shape, the bundles 11 of reinforcing fibers in any adjacent two of the reinforcing fiber sheets 13 are shifted into different directions and deformed into different shapes: the individual bundles 11 of reinforcing fibers easily follow the shift or deformation without hindering the shift of the bundles 11 of reinforcing fibers to one another nor the deformation of the bundles 11, so as to have a desired shape as the whole of the laminate. As a result, the preform can be made up with good precision by a simple and easy mold-pressing mechanism.

The bundles 11 of reinforcing fibers of the reinforcing fiber sheets 13 are joined to one another through a binder, for example, the thin nonwoven fabric 42, in an amount far smaller than the amount of yarn bundles of the bundles 11 of reinforcing fibers themselves. The nonwoven fabric 42 and the bundles 11 of reinforcing fibers undergo point-adhesion into the form of dots. Additionally, cuts are made into the nonwoven fabric 42 itself to make the nonwoven fabric 42 easily deformable. Thus, the reinforcing fiber sheets 13 become higher in deformability.

The nonwoven fabric 42, which has been given as an embodiment of the binder, may be made of short fibers or continuous fibers, or may be made of a mixture of the two. It is unessential that the binder is the nonwoven fabric 42, and thus a film, fibers, or various other materials are usable. It is possible to use a material which is obtained in a melt-blown manner of blowing a resin melted with a solvent or by heat into air to be solidified. Fig. 2 illustrates an apparatus in a melt-blown manner according to an embodiment of the present invention for producing a reinforcing fiber sheet. In this manner, a melt-blown apparatus 44 is used to blow a material directly onto bundles 11 of reinforcing fibers placed on a belt conveyer 30 to produce a binder 45, thereby fixing the bundles 11 of reinforcing fibers.

As a method other than the above-mentioned method, for example, the following method is conceivable: a method of preparing a binder produced beforehand into a nonwoven fabric form by melt-blowing in a different step, and then adhering the binder onto the bundles 11 of reinforcing fibers. About the amount of the binder, the weight per unit area thereof is preferably 1/10 or less of that of the reinforcing fibers.

The material used for the binder is preferably a material having stretchability, considering the above-mentioned deformability. A specific example of the material is an undrawn yarn made of, for example, a rubber, a thermoplastic elastomer, or nylon/polyester. However, the material is not limited to these materials, and various materials are usable as far as the materials have an appropriate stretchability. About the stretchability, when a material shows a stretchability of 200% or more, or at least 150% or more of the original length thereof, the resultant reinforcing fiber sheet can gain good deformability.

In connection with the amount of the given binder, the bundles of reinforcing fibers are more strongly fixed to one another so that the resultant is improved in handleability as the binder is given into a thicker form. As the binder is given into a thinner form, fixing between the bundles of reinforcing fibers becomes weaker so that the above-mentioned deformability increases. In order to make these conflicting properties compatible with each other, it is conceivable that the binder is given into a thin form at regions of the substrate where the substrate is expected to increase in deformation quantity while the binder is given into a thick form at the other regions. Similarly, it is also conceivable that the binder is given into a thick form in a circumferential region of the substrate while the binder is given into a thin form in the central region thereof, whereby the deformability of the central region is kept while the fibers are prevented from disentangling from the circumference of the substrate to cause the resultant reinforcing fiber sheet to have good handleability. When the amount of the binder to be adhered is controlled in this way at will at every position of the substrate in accordance with the -situation, the control is very easy, using any one of the manners usable in the present patent, in particular, in the melt-blown manner.

The material of the bundles 11 of reinforcing fibers is preferably a material having electroconductivity for permitting the bundles to be chucked by electrostatic force. Carbon fibers are particularly preferred since the fibers are a good conductor and further have, as reinforcing fibers, a high strength and a high elastic modulus. However, even in the case of using fibers which themselves are not conductors, such as glass fibers or Kevlar fibers, the electrostatic chucking can be attained by causing a component for lowering the electric resistance, such as a surfactant, to adhere onto the surface of the fibers. When the bundles 11 of reinforcing fibers can be fixed by electrostatic force, it is unnecessary to give the bundles 11 of reinforcing fibers a component necessary for fixing one end of each of the bundles 11 of reinforcing fibers onto the belt conveyer 30, for example, a thermoplastic tackifier that will be described later. This matter contributes largely to a decrease in costs of the bundles 11 of reinforcing fibers. Additionally, it becomes unnecessary to use a laser irradiation apparatus or any other large-sized heating system necessary for melting the thermoplastic tackifier. This matter can further contribute to the decrease in costs.

For the flat plate on which the bundles 11 of reinforcing fibers are firstly put, the following are usable besides the above-mentioned belt conveyer 30: a mere metal plate or resin plate, a resin film, and various other materials.

The method for fixing the bundles 11 of reinforcing fibers to be matched with any one of these materials, is the above-mentioned electrostatic.

In the subsequent separating step, the reinforcing fibers cannot be separated from the flat plate at will. In this case, a mechanism for the separation is required. The method for the separation is by cancellation of electrostatic chucking.

When a nonwoven fabric is used as the binder, the material of the nonwoven fabric may be selected from continuous fibers, short fibers, and various other materials in various forms. At this time, of course, it is desired to use a material good in adhesion to the reinforcing fibers. In order to realize high shape followability which is a target of the present invention, it is desired to use a material causing the nonwoven fabric itself to have elasticity.

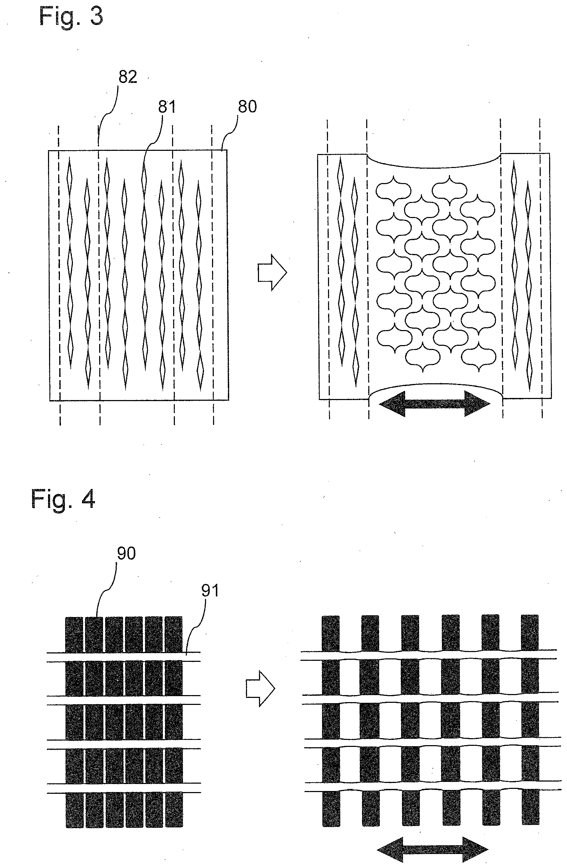

The method for giving elasticity to the binder, as well as the nonwoven fabric, may be a method of giving cuts to the binder. As illustrated in the left side of Fig. 3, the pattern of cuts 81 is a pattern in which cut sites are arranged in a zigzag form. In this case, it is advisable to arrange the cuts 81 to make the direction of the cuts 81 consistent with the direction of bundles 82 of reinforcing fibers. According to such a pattern, when any adjacent two of the bundles 82 of reinforcing fibers receive force therebetween, only a region of the binder is deformed as illustrated in the right side of Fig. 3 so that the binder region exhibits elasticity. As a result, the elasticity can contribute to the shape followability of the reinforcing fiber sheets 13. Besides this pattern, various patterns are selectable and usable to be matched with the target elasticity and adhesion pattern.

When fibers are used as the binder, properties different from those of an isotropic material, such as a nonwoven fabric or film, can be imparted by lining up the fibers into one direction and then adhering the lined-up fibers onto the bundles of reinforcing fibers. As illustrated in, for example, the left side of Fig. 4, in a case where fibers which are to be a binder are lined up into one direction, and then placed to cause bundles 91 of reinforcing fibers to be joined with one another into a bamboo blind form, the following can be attained as illustrated in the right side of Fig. 4 when the fibers, which are to be the binder, have elasticity: about the deformation in a fiber-pulled direction of the fibers, which are to be the binder, the binder itself deforms to gain deformability. At this time, the orientation direction of the bundles 91 of reinforcing fibers is desirably perpendicular to the orientation direction of the binder since the deformation of the binder is not hindered. Even at an angle other than the perpendicularity, it does not occur that the substrate deforming effect based on the binder deformation as described above is not obtained at all. Thus, the respective orientation directions of the two are not particularly limited.

The method for lining up the fibrous binder into one direction and giving the binder may be a method of using a pulling-out apparatus to place a binder prepared beforehand as fibers onto the bundles of reinforcing fibers, or a method of placing a spun fibrous binder directly, on the spot, into the bundles of reinforcing fibers. According to, in particular, a method of placing a semi-melted thermoplastic resin binder through a spunbond method onto the bundles of reinforcing fibers, the binder is cooled and solidified on the bundles of reinforcing fibers, thereby attaining adhesion between the bundles of reinforcing fibers and the binder simultaneously. Thus, this method is efficient. Also when fibers are rendered a binder, of course, it is desired that the material of the binder is good in adhesion onto the bundles of reinforcing fibers. In order to realize high shape followability which is a target of the present invention, the binder material is desirably a material in which fibers themselves have elasticity.

The point adhesion device 50 is selectable from various methods, such as a laser irradiation method, ultrasonic welding, and high-frequency welding, besides the emboss roll 51. When the reinforcing fibers are a material good in electroconductivity, such as carbon fibers, electricity can be caused to flow locally and directly into the reinforcing fibers by pushing an indenter having a tip having positive and negative electrodes thereonto. This case makes it possible to simplify the structure of the facilities, and further gives only a small thermal damage onto the belt conveyer since the heating in this case is immediate heating. Thus, this method is an effective method.

### INDUSTRIAL APPLICABILITY

The present invention is suitable for producing, particularly, a preform or fiber reinforced plastic that has a three-dimensional shape. The invention can provide a reinforcing fiber sheet optimal for the production thereof.

### DESCRIPTION OF REFERENCE SIGNS

- 10:: Reinforcing fiber bobbin
- 11:: Bundle of reinforcing fiber
- 12:: Reinforcing fiber sheet precursor
- 13:: Reinforcing fiber sheet
- 20:: Reinforcing fiber placement apparatus
- 21:: Fiber placement head
- 30:: Belt conveyer with electrostatic chucking
- 31:: Built-in electrode
- 32:: Feeding electrode
- 33:: High voltage power supply
- 40:: Binder feeder
- 41:: Nonwoven fabric roll
- 42:: Nonwoven fabric
- 43:: Cut maker
- 44:: Melt-blown apparatus
- 45:: Binder (melt-blown)
- 50:: Point adhesion device
- 51:: Emboss roll
- 60:: Cutting device
- 61:: Cutter
- 70:: Separating device
- 71:: Chucking head
- 80:: Binder
- 81:: Cut
- 82:: Bundle of reinforcing fiber
- 90:: Binder (fibrous)
- 91:: Bundle of reinforcing fiber

## Claims

1. A method for producing a reinforcing fiber sheet in which a plurality of bundles of reinforcing fibers that are lined up into one direction to form a plane are adhered to one another through a binder, the method comprising the following steps (a), (b) and (c):
step (a) of placing a plurality of bundles of reinforcing fibers each having a predetermined length at a predetermined position on a flat plate, and fixing the bundles of reinforcing fibers onto the flat plate, wherein in step (a), electrostatic chucking force is used to attain the fixing of the bundles of reinforcing fibers onto the flat plate,
step (b) of placing a binder onto the bundles of reinforcing fibers to be adhered onto the bundles, and
step (c) of, after the step (b), separating the reinforcing fiber sheet from the flat plate by cancellation of electrostatic chucking.

2. The method for producing the reinforcing fiber sheet according to claim 1, wherein the binder comprises a material having a stretchability of 150% or more.

3. The method for producing the reinforcing fiber sheet according to claim 1 or 2, wherein the binder comprises fibers lined up into one direction.

4. The method for producing the reinforcing fiber sheet according to claim 1 or 2, wherein the binder is a nonwoven fabric comprising short fibers and/or continuous fibers.

5. The method for producing the reinforcing fiber sheet according to any one of claims 1, 2 and 4, wherein the binder is supplied in a melt-blown manner in which a resin is jetted out through pores to the atmosphere.

6. The method for producing the reinforcing fiber sheet according to claim 1 or 2, wherein the binder is a film.

7. The method for producing the reinforcing fiber sheet according to claim 4 or 6, comprising the step of making a plurality of cuts in the nonwoven fabric or the film.

8. The method for producing the reinforcing fiber sheet according to any one of claims 1 to 6, comprising the step of making a plurality of cuts in the reinforcing fiber sheet.

9. The method for producing the reinforcing fiber sheet according to any one of claims 1 to 8, wherein in step (a), the flat plate is a flat region of a belt conveyer.

10. The method for producing the reinforcing fiber sheet according to any one of claims 1 to 9, wherein in the adhesion of the binder onto the bundles of reinforcing fibers, a plurality of positions selected at will are caused to undergo point-adhesion.

## Patentansprüche

1. Verfahren zur Herstellung einer Verstärkungsfaserschicht, bei der eine Vielzahl von Bündeln aus Verstärkungsfasern, die zur Bildung einer Ebene in einer Richtung aneinandergereiht sind, durch ein Bindemittel aneinander geklebt werden, wobei das Verfahren die folgenden Schritte (a), (b) umfasst:
Schritt (a) eines Anordnens einer Vielzahl von Bündeln aus Verstärkungsfasern, die jeweils eine vorbestimmte Länge an einer vorbestimmten Position auf einer flachen Platte aufweisen, und Fixieren der Bündel aus Verstärkungsfasern auf der flachen Platte, wobei im Schritt (a) eine elektrostatische Einspannkraft zum Erreichen der Fixierung der Bündel aus Verstärkungsfasern auf der flachen Platte verwendet werden,
Schritt (b) eines Aufbringens eines Bindemittels auf die Bündel aus Verstärkungsfasern, die auf die Bündel geklebt werden sollen, und
Schritt (c) eines, nach dem Schritt (b), Trennens der Verstärkungsfaserschicht von der flachen Platte durch Aufheben des elektrostatischen Einspannens.

2. Verfahren zur Herstellung der Verstärkungsfaserschicht nach Anspruch 1, wobei das Bindemittel ein Material mit einer Dehnbarkeit von 150% oder mehr umfasst.

3. Verfahren zur Herstellung der Verstärkungsfaserschicht nach Anspruch 1 oder 2, wobei das Bindemittel Fasern umfasst, die in einer Richtung aneinandergereiht sind.

4. Verfahren zur Herstellung der Verstärkungsfaserschicht nach Anspruch 1 oder 2, wobei das Bindemittel ein Vliesstoff ist, der Kurzfasern und/oder Endlosfasern umfasst.

5. Verfahren zur Herstellung der Verstärkungsfaserschicht nach einem der Ansprüche 1, 2 und 4, wobei das Bindemittel auf schmelzgeblasene Weise zugeführt wird, bei der ein Harz durch Poren in die Atmosphäre ausgestoßen wird.

6. Verfahren zur Herstellung der Verstärkungsfaserschicht nach Anspruch 1 oder 2, wobei das Bindemittel eine Folie ist.

7. Verfahren zur Herstellung der Verstärkungsfaserschicht nach Anspruch 4 oder 6, das einen Schritt des Vornehmens einer Vielzahl von Einschnitten im Vliesstoff oder der Folie umfasst.

8. Verfahren zur Herstellung der Verstärkungsfaserschicht nach einem der Ansprüche 1 bis 6, umfassend einen Schritt des Vornehmens einer Vielzahl von Einschnitten in der Verstärkungsfaserschicht.

9. Verfahren zur Herstellung der Verstärkungsfaserschicht nach einem der Ansprüche 1 bis 8, wobei im Schritt (a) die flache Platte ein flacher Bereich eines Bandförderers ist.

10. Verfahren zur Herstellung der Verstärkungsfaserschicht nach einem der Ansprüche 1 bis 9, wobei beim Anhaften des Bindemittels an den Bündeln aus Verstärkungsfasern bei einer Vielzahl von nach Belieben ausgewählten Positionen die Bildung einer Punkthaftung bewirkt wird.

## Revendications

1. Procédé de fabrication d'une feuille de fibres de renfort dans laquelle une pluralité de faisceaux de fibres de renfort qui sont alignés dans une seule direction pour former un plan, adhèrent les uns aux autres par un liant, le procédé comprenant les étapes (a), (b) et (c) suivantes :
l'étape (a) consistant à placer une pluralité de faisceaux de fibres de renfort ayant chacun une longueur prédéterminée à une position prédéterminée sur une plaque plate, et à fixer les faisceaux de fibres de renfort sur la plaque plate, où à l'étape (a), une force de serrage électrostatique est utilisée pour réaliser la fixation des faisceaux de fibres de renfort sur la plaque plate,
l'étape (b) consistant à placer un liant sur les faisceaux de fibres de renfort à faire adhérer sur les faisceaux, et
l'étape (c) consistant, après l'étape (b), à séparer la feuille de fibres de renfort de la plaque plate en annulant le serrage électrostatique.

2. Procédé de fabrication de la feuille de fibres de renfort selon la revendication 1, dans lequel le liant comprend un matériau ayant une aptitude à l'étirage supérieure ou égale à 150%.

3. Procédé de fabrication de la feuille de fibres de renfort selon la revendication 1 ou 2, dans lequel le liant comprend des fibres alignées dans une seule direction.

4. Procédé de fabrication de la feuille de fibres de renfort selon la revendication 1 ou 2, dans lequel le liant est un tissu non tissé comprenant des fibres courtes et/ou des fibres continues.

5. Procédé de fabrication de la feuille de fibres de renfort selon l'une quelconque des revendications 1, 2 et 4, dans lequel le liant est fourni par fusion-soufflage où une résine est giclée à travers les pores vers l'atmosphère.

6. Procédé de fabrication de la feuille de fibres de renfort selon la revendication 1 ou 2, dans lequel le liant est un film.

7. Procédé de fabrication de la feuille de fibres de renfort selon la revendication 4 ou 6, comprenant l'étape consistant à réaliser une pluralité de découpes dans le tissu non-tissé ou le film.

8. Procédé de fabrication de la feuille de fibres de renfort selon l'une quelconque des revendications 1 à 6, comprenant l'étape consistant à réaliser une pluralité de découpes dans la feuille de fibres de renfort.

9. Procédé de fabrication de la feuille de fibres de renfort selon l'une quelconque des revendications 1 à 8, dans lequel, à l'étape (a), la plaque plate est une région plate d'un transporteur à courroie.

10. Procédé de fabrication de la feuille de fibres de renfort selon l'une quelconque des revendications 1 à 9, dans lequel, lors de l'adhérence du liant sur les faisceaux de fibres de renfort, une pluralité de positions sélectionnées à volonté sont amenées à subir une adhérence par points.
